# EUROPEAN PATENT APPLICATION

(11) **EP 1 623 793 A1**
(43) Date of publication of application: **08.02.2006**
(21) Application number: 05381019.8
(22) Date of filing: 12.04.2005
(51) Int. Cl.: B23Q 11/00, B23B 47/34, B28D 7/02

(54) **Exhauster device applicable to manual drills**

(30) Priority: 13.04.2004 ES 200400958
(71) Applicant: Martin Camara, Jesus Maria, 20280 Hondarribia (Guipuzcoa) (ES)
(72) Inventor: Martin Camara, Jesus Maria, 20280 Hondarribia (Guipuzcoa) (ES)
(74) Representative: Urizar Anasagasti, Jesus Maria

(57) **Abstract**

An exhauster device applicable to manual drills, formed by an exhaust member operated by the motor of the drill, comprising a telescopic exhaust tube (1-2) running parallel to and beneath the body of the drill and of the bit (62) thereof, provided with an inner spring (5) tending to keep it distended at the level of the end of the bit so that it is always located beneath the work area; said tube ends in a collection scoop (3) provided with a top opening (31) in which dust or wastes released by the same fall; said scoop (3) has a connection with the exhaust tube (2) in the intermediate area and a receptacle (34) in the bottom portion for the byproducts falling into it, and means (43) in the front area for adhering to the surface on which the drill is operating.

## Description

### Object of the Invention

As the title indicates, the present invention refers to an exhauster device coupled to a manual drill for exhausting the dust and residues generated by the former, collecting them in a small deposit made for that purpose.

### Background of the Invention

Exhaust systems in fixed machines in shops are normally installed, being either a common system for all the machines or individual systems for each machine. Some portable machines also have their own exhaust and deposit systems, for example both orbital and belt sanders. Other machines have an outlet for waste in which a collection system can be adapted, for example portable electric wood planes.

Focusing on drilling work, those fixed systems installed in the shop may have suitable systems for exhausting the waste produced during use, keeping the worksite clean, but when it is a portable drill, the use of which is not limited to one permanent site, the waste spreads and makes it necessary to subsequently clean or perhaps previously prepare the site where the drilling will occur and the surroundings thereof, removing equipment and furniture so that they do not become dirty, with the extra work this entails.

Patent document ES-20040101 discloses a dust collector applicable to drills comprising: a support member provided with clamping screws for fixing it on the fixed front area of the drill; extensible arms fixed to the support member arranged parallel to the rotating shaft of the drill; a bushing fixed to the front end of the support arms, facing the support member; and a flexible tubular body of a transparent material intended for acting frontally on the surface to be drilled.

Patent document ES-2134120 refers to a drill-exhauster formed by the combination of a drilling machine or the like and an exhaust member formed by a runner actuated by the drive body assembled after inserting a filtering mesh on one side of a collection box for the residues formed in the drilling operation. This box has on its opposite wall an opening for the connection of a semi-rigid tube provided on its end with a widened nozzle which is applied against the surface to be perforated and the geometric shape of which depends on the type of work to be done.

Patent document ES-1027295 refers to a dust guard for manual drills of the type used for drilling in walls and partition walls, comprising a flexible tubular part preferably made of plastic formed by a central portion larger in diameter having a bellows shape, and two other smooth end portions smaller in diameter, one of them is in contact with the wall at its free end, whereas the other portion is tightly coupled to the fixed portion of the drill close to its rotating head.

Patent document DE-19860182 discloses an exhaust device separate from the drill itself, formed by a bellows, the opening of which ends in the bottom area of the drill bit. For its part, document DE-3516099 discloses a similar member with exhaust equipment separate from the drill and connected through a bellows-like tube to the bottom area of the drill bit.

### Description of the Invention

The device of the present invention comprises a telescopic exhaust tube coupled in the exhaust member included in the drill and running parallel to and beneath the body of the drill and of the bit thereof, provided with an inner spring or equivalent means tending to keep it distended at the level of the end of the bit so that it is always located beneath the work area; said tube ends in a collection scoop provided with a top opening, located beneath the drill bit, into which the dust or waste released from the drill fall; in the intermediate area, this scoop has a connection with the exhaust tube and at the bottom portion has a storage receptacle for said byproducts falling into it, particularly when the drill is no longer running, and at the front, on the side facing the work surface on which the drill is operating, it has adhesion means preventing the dust and other residues from falling over the sides of or below the scoop.

According to another feature of the invention, the collection scoop has a tapering preventing the dust and wastes from returning towards the top opening, beneath which there is a cylindrical cavity, larger in diameter than the end of the exhaust tube, which only has a bottom access through a window, such that the product falling into said cavity slips over the sides to the bottom receptacle, being absorbed from this bottom window, which is protected by a valve partially closing when the exhaust starts running, being opened when the drill is switched off.

According to another feature of the invention, said collection scoop is formed by two parts: a) one part forming the main body of the scoop in terms of the definition of the inner members: top byproduct inlet tube, coupling with the exhaust tube, inner residue conveyance cavity and bottom deposit; and b) a front cover of the assembly integrating or having coupling means for a deformable flexible membrane which adapts itself to the surface on which it acts when the drill is in the operative position, having a bottom window coinciding with the residues deposit provided with a cover which allows emptying it without needing to take the assembly apart.

According to another feature of the invention, the absorption tube has two parts coupling together by tongue jointing, having a longitudinal guide or equivalent means allowing their telescopic movement but preventing their rotation, such that the final end or collection scoop is always located in the same operative position beneath the drill bit, and they are provided on the ends with respective stops for an inner spring that tends to keep them in a deployed position, but allows reducing their total length when the front end acts on the surface to be drilled through the corresponding scoop; the stop of the front part is formed by an inner perimetral rib located behind the bottom absorption window and further forming a fixing means for a filter which prevents materials from entering the exhaust of the drill.

The device of the present invention introduces important advantages over any of those mentioned above that are part of the state of the art; namely:
a) the drill to which it is connected has an opening through which an additional fan of the drill does the exhaust, such that no external exhaust members are required apart from the drill itself;
b) the support it provides against the base to be drilled facilitates the perpendicularity of the drill;
c) the tube insertion stop prevents the drill chuck from colliding against the base to be drilled when it strikes a hollow, such as a hollow brick or plaster, protecting both the base to be drilled and the drill chuck itself;
d) the suction cup of the collection scoop keeps the drill steady and slip-free while working on slippery bases, such as tiles, aiding in the accuracy thereof;
e) drilling depth can be controlled with simple marks on the extensible tube, using it as a guide, making the bar usually attached to the drill for that purpose unnecessary.

### Description of the Figures

To complement the description being made and for the purpose of helping to better understand the features of the invention, a set of drawings is attached to this specification in which the following is shown with an illustrative and non-limiting character:

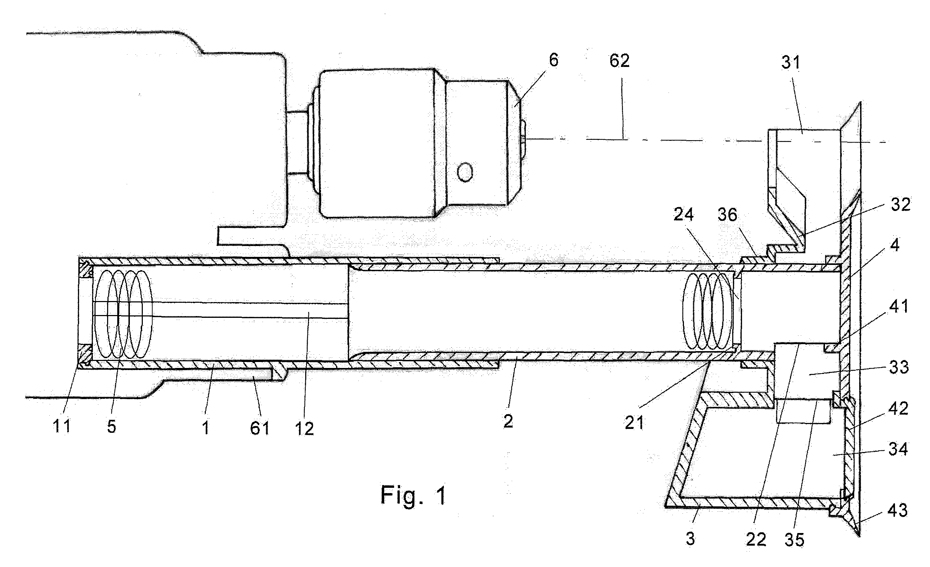

Figure 1 shows a general elevational and sectional view of the device of the present invention.

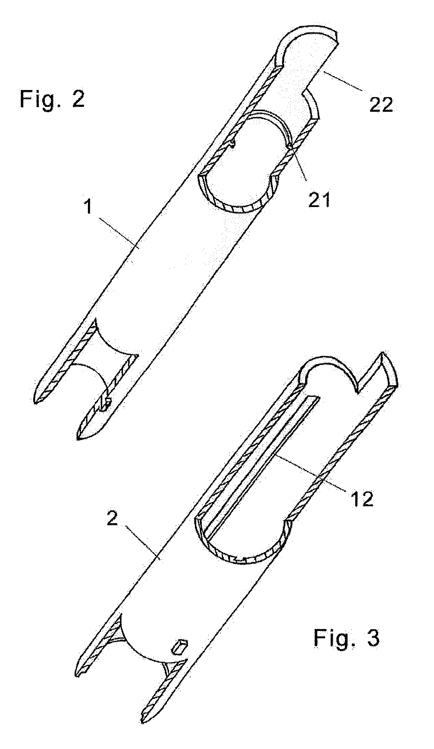

Figures 2 and 3 represent a general perspective view of the parts (1) and (2) forming the basic telescopic tube of this device.

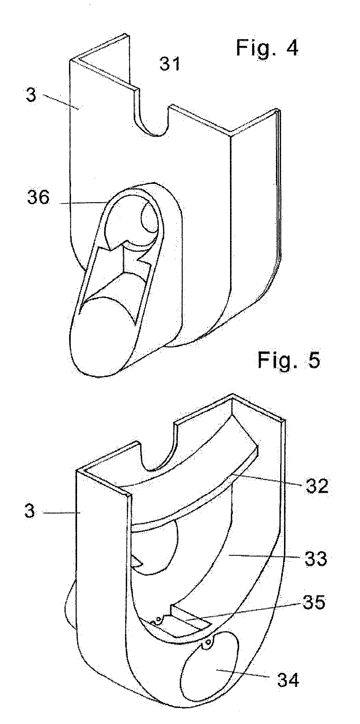

Figures 4 and 5 represent two perspective views of part (3) which forms the base of the collection scoop.

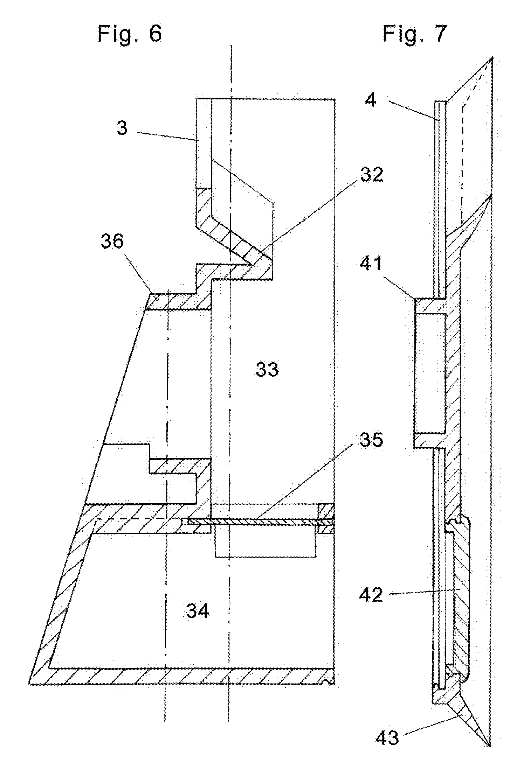

Figure 6 shows a profile sectional view of part (3).
Figure 7 shows a profile sectional view of part (4).

The exhaust device applicable to manual drills according to the present invention is formed by an exhaust member operated by the motor of the drill, essentially comprising a telescopic exhaust tube (1-2) coupled in the exhaust member (61) of the drill (6) and running parallel to and beneath the body of the drill and of the bit (62) thereof, provided with an inner spring (5) or equivalent means tending to keep it distended at the level of the end of the bit, which ends in a collection scoop (3) provided with a top opening (31) in which dust or wastes released from the drill when it perforates a surface are released.

The telescopic tube is formed by two tubes, an outer one (1) and an inner one (2), having the necessary diameter so that the insertion of one inside the other one is smooth and at the same time firm, with no allowances. In these tubes, part (1) is provided with two grooves (12) on its inner side through which two flaps projecting from the outer side of part (2) will slide. Once inserted, they will prevent the removal of the latter from inside the first tube at the front portion, as well as the rotation between them, maintaining a single retractile movement ability.

An extending action spring (5) is housed inside these tubes, keeping them at their maximum length. To that end, the two tubes have stops (11) and (21) maintaining the spring (5) and its expansive force inside them.

The stop for the spring on part (1) consists of a cover (11) which is placed by pressure on the end of the tube after having inserted the spring (5). This cover has a circular groove in which the end of the spring is coupled and a central opening which converges with the exhaust channel (61) of the fan of the drill. Projecting from the opposite end is part (2), which has no stop for the spring (5) on its end but leaves a hollow perimetral rib (21) between it and its opening where a filter (24) preventing the introduction of wastes, but not the air the drill sucks, is housed.

Located on the end of part (2) housing the filter (24) is the opening (22) having the purpose of attracting the dust through it, at the bottom portion of the chamber (33), inwardly of the tube (2), such that when the drill and with it the exhaust are no longer operating, these wastes fall due to their own weight into a deposit (34) located in the bottom portion of the scoop (3) where this end of the tube will be coupled.

The collection scoop is formed by two parts, a main part (3), which is coupled to part (2) of the tube, and a cover (4) which is coupled to it, making the head a sealed recipient.

The scoop (3) has a top opening (31) through which the residues will be absorbed. This opening is reduced by means of a vane (32) to a smaller area for intensifying the exhaust action. The residues will be routed along the vane (32) towards the inner (33) where the tube (2) ends, which has an exhaust opening (22) in the bottom portion; the products entering in this area fall along the sides of the tube (2) towards the bottom recipient (34). When the drill is switched on and with it the exhaust, it will again absorb through said groove (22) since the inside of the head has no air inlet. In addition to this groove, the main part of the head is provided with an inlet (36) adjusted to the measurement of the tube (2) located in its central area and towards the rear area. In the bottom area, it has a deposit (34) which will house the residues, which has a semicircular-shaped double valve (35) which is coupled to the inside of the deposit, keeping it open when the drill is switched off and closing it when the exhaust begins to run.

This scoop has a cover (4) in the front portion which at it top portion has a semicircular window coinciding with the entry point of the bit. In the central area on its inner face, it has a circular opening (41) with a flat base which houses the end of the tube (2) so as to allow the entry of said part in a single position and to collaborate in the perfect perpendicularity between the tubes (1) and (2), achieving perfect support against the base to be drilled. The evacuation cap (42) of the deposit (34) is located in the bottom portion. The entire perimeter of the cap on its outer face is edged by a flexible membrane (43) which acts like a suction cup. This membrane adjusts itself to the defects of the wall so as to prevent grooves which make dust collection difficult and keeps the drill steady on slippery surfaces such as tiles, preventing slips and facilitating accuracy of the drilling.

The necessary variations in the drill (6) for coupling the apparatus are carried out in the casing of the drill which requires a small length extension. The two ventilators could be joined in a single symmetrical part with blades on both sides which carry out the two functions, a membrane separating the two faces being necessary, as well as wider air outlet grids. The invention will be inserted at the opening (61), located in the bottom front portion of the drill up to the exhaust area, that is the ventilator closest to the drill chuck, said opening will have the appropriate shape and diameter so that it only enters in a correct and firm position with no allowances, the flaps existing in part (1) will aid in this, which flaps will be coupled to their housings on the two sides and the bottom side of the opening of the (61) drill hole. This inlet has a cap so as to prevent air inlet when the exhauster is not being used.

Having sufficiently described the nature of the invention as well as a preferred embodiment, it is stated for all intents and purposes that the materials, shape, size and arrangement of the described members may be modified provided it implies no alteration of the essential features of the invention which are claimed beneath.

## Claims

1. An exhauster device applicable to manual drills, formed by an exhaust member operated by the motor of the drill, **characterized in that** it comprises a telescopic exhaust tube (1-2) coupled on the exhaust member (61) included in the drill (6) and running parallel to and beneath the body of the drill and of the bit thereof (62), provided with an inner spring (5) or equivalent means tending to keep it distended at the level of the end of the bit so that it is always located beneath the work area; said tube ends in a collection scoop (3) provided with a top opening (31) which is located beneath the drill bit and in which the dust or wastes released by said drill fall; said scoop (3) has a connection with the exhaust tube (1-2) in the intermediate section and a storage receptacle (34) in the bottom portion for the byproducts falling into it, particularly when the drill is no longer running, and in the front portion has adhesion means (43) for adhering to the wall or surface on which the drill is operating preventing dust and other residues from falling over the sides of or below the scoop.

2. A device according to the previous claim, **characterized in that** the collection scoop (3) has a tapering (32) in the top portion preventing dust and wastes from returning towards the top opening beneath which there is a cylindrical cavity (33) that is larger in diameter than the end of the exhaust tube (2), which only has a bottom access through a window (22), such that the product falling into said cavity (33) falls along the sides to the bottom receptacle (34), being absorbed from this bottom window, which is protected by a valve (35) that partially closes when the exhaust begins running.

3. A drill according to the previous claims, **characterized in that** said collection blade is formed by two parts: a) a part (3) forming the main body of the scoop in terms of the definition of the inner members: top drop tube, coupling with the exhaust tube (36), inner residue conveyance tube (33) and bottom deposit (34); and b) a front cover (4) of the assembly integrating or having coupling means for a deformable flexible membrane (43) which adapts itself to the surface on which it works when the drill is in an operative position, having a bottom window coinciding with the residues deposit (34), provided with a cover (42) allowing the emptying thereof without needing to take apart the assembly.

4. A device according to the previous claims, **characterized in that** the absorption tube has two parts (1-2) coupled together by tongue jointing, having a longitudinal guide (12) or equivalent means allowing their telescopic movement but preventing their rotation, such that the final end or collection scoop (3) is always located in the same operative position beneath the drill bit, and they are provided with respective stops (11-21) on the ends for an inner spring (5) that tends to keep them in the deployed position but allows reducing the total length when the front end, formed by the flexible membrane (43) that the scoop has on the front face, acts on the surface to be drilled; the stop (21) is formed by an inner perimetral rib that is located behind the bottom window (22) and further forms a means of fixing a filter (24) which prevents materials from entering the exhauster of the drill.
